**Europäisches Patentamt**

**European Patent Office**

**Office européen des brevets**

(11) Veröffentlichungsnummer: **0 253 804**
**B1**

(19)

(12) # EUROPÄISCHE PATENTSCHRIFT

(45) Veröffentlichungstag der Patentschrift:
26.07.89

(51) Int. Cl.⁴: **A 44 C 11/02, A 44 C 7/00**

(21) Anmeldenummer: **86900072.9**

(22) Anmeldetag: **20.12.85**

(86) Internationale Anmeldenummer:
**PCT/DE 85/00547**

(87) Internationale Veröffentlichungsnummer:
**WO 86/04492 (14.08.86 Gazette 86/18)**

(54) **EINTEILIGE SCHLIESSE, INSBESONDERE FÜR SCHMUCKWAREN.**

(30) Priorität: **05.02.85 DE 3503790**

(43) Veröffentlichungstag der Anmeldung:
**27.01.88 Patentblatt 88/4**

(45) Bekanntmachung des Hinweises auf die Patenterteilung:
**26.07.89 Patentblatt 89/30**

(84) Benannte Vertragsstaaten:
**CH DE FR GB IT LI**

(56) Entgegenhaltungen:
**FR-A- 499 892**
**US-A- 1 540 030**
**US-A- 3 599 298**

(73) Patentinhaber: **KOPPER, Willibald, Neubachstrasse 73,
D-6520 Worms-Horchheim (DE)**

(72) Erfinder: **KOPPER, Willibald, Neubachstrasse 73,
D-6520 Worms-Horchheim (DE)**

(74) Vertreter: **Rosenfeld, Jürgen, Dipl.-Ing.,
Magdalenenstrasse 1, D-6106 Erzhausen (DE)**

# Beschreibung

Die Erfindung betrifft eine einteilige Schliesse, insbesondere für Schmuckwaren, die aus zwei an ihrem einen Ende in einer gemeinsamen Drehachse schwenkbar gelagerten und an ihren anderen Enden lösbar verbindbaren Schliessteilen besteht.

Derartige Schliessen dienen dazu, die Enden einer Perlenkette, eines Kolliers oder von Armbändern, Gürtel u. dgl. miteinander zu verbinden. Die Verbindung soll zuverlässig sein und eine mühelose Handhabung der Schliesse bei einfachem Aufbau voraussetzen.

Bekannte Schliessen erfüllen diese Anforderungen nicht optimal.

So sind beispielsweise bei einer bekannten Schliesse für Schmuckketten (DBGM 75 13 404) die schenkelförmig um eine gemeinsame Achse schwenkbar miteinander gelenkig verbundenen Schliessteile an ihren freien Enden mit zusammenwirkenden Rastelementen versehen, die, bezogen auf die Öffnungsbewegung, einander formschlüssig hintergreifen. Da das Öffnen der Schliesse durch elastische Verformung der Schliessteile bewirkt wird und die Öffnungsrichtung in Richtung der Zugachse liegt, kann schon bei relativ geringen Zugkräften die Schliesse sich unerwünscht öffnen.

Aufgabe der Erfindung ist es, die erwähnten Nachteile zu vermeiden und eine Schliesse der eingangs genannten Art zu schaffen, die einfach in Aufbau und Handhabung, kostengünstig in der Herstellung sowie zuverlässig im Verschluss ist und auch bei Einwirkung grösserer Zugkräfte sich nicht selbsttätig öffnen kann.

Erfindungsgemäss wird diese Aufgabe mit einer Schliesse gelöst, bei der ein Schliessteil aus einem in sich federnd ausgebildeten Doppelhaken mit spiegelbildlich beiderseits der Zugachse entgegengesetzt gerichteten Hakenöffnungen besteht und mit einem Hakenende an einer das andere Schliessteil bildenden Verschlussklappe angelenkt und mit seinem anderen Ende über eine Rast und eine Gegenrast an der Verschlussklappe kraftschlüssig festlegbar ist, wobei der Doppelhaken und die Verschlussklappe zum Öffnen und Schliessen um 360° überkreuzend schwenkbar und so ausgebildet sind, dass eine Schwenkbewegung in einer Richtung jeweils eine Hakenöffnung öffnet und die andere schliesst und umgekehrt. Zweckmässig ist hierbei durch die ausrastende Schwenkbewegung des Doppelhakens in einer Richtung die eine und durch die überrastende Schwenkbewegung in der anderen Richtung die andere Hakenöffnung öffenbar, während in Raststellung der Schliesse die Hakenöffnungen dadurch geschlossen sind, dass die Verschlussklappe spiegelbildlich zu den Hakenöffnungen des Doppelhakens gerichtete Bogenabschnitte aufweist.

Die erfindungsgemässe Schliesse ist besonders einfach aufgebaut und bildet im geschlossenen Zustand (Raststellung) einen auf Zug besonders belastbaren Verband, welcher bei leichter Bauweise relativ hohe Zugkräfte aufnehmen kann. Durch die einfache Bauweise der Schliesse ist eine besonders kostengünstige Herstellung möglich.

Nach einer vorteilhaften Ausbildung der erfindungsgemässen Schliesse kann die Verschlussklappe als U-förmiger Bügel ausgebildet sein, der mit seinen freien Enden ein gemeinsames Schwenklager mit dem einen Ende des Doppelhakens bildet und diesen torförmig umschliesst und am Bügeljoch kann eine Rast angeordnet sein, die mit einer am freien Ende des Doppelhakens befindlichen Gegenrast beim Öffnen und Schliessen zusammenwirkt. Rast und Schwenklager werden hierbei mit Vorteil von sich gegenüberliegenden Seiten eines rahmenartigen Gehäuses (Verschlussklappe) gebildet, dessen andere beide Rahmenseiten verlängerte Lagerschilde des Schwenklagers bilden. Das Schwenklager kann in einfacher Weise aus einem die gemeinsame Drehachse von Verschlussklappe und Doppelhaken bildenden Lagerzapfen mit an den Zapfenden festgelegten Lagerschilden und einem Ende des in einer Lagerbohrung freidrehbeweglich zwischen den Lagerschilden gelagerten Doppelhakens bestehen.

Je nach den vorhandenen Fertigungsmöglichkeiten und dem Verwendungszweck können unterschiedliche Ausführungsformen zweckmässig sein. Danach können die Lagerschilde aus in parallelem Abstand zueinander angeordneten Formteilen gebildet oder aber schalenförmig ausgebildet und mit Ausnehmungen zur Aufnahme von Rast und Lagerzapfen versehen sein. Denkbar ist auch eine Ausbildung der Lagerschilde als Gussteil oder Blechformteil, wobei als Ausnehmungen jeweils angegossene bzw. angeformte Augen vorgesehen sein können. Die gegenseitige Verbindung der Lagerschilde im parallelen Abstand kann zweckmässig über einen in jeweils gegenüberliegende Augen eingesetzten Lagerzapfen und Rastbolzen erfolgen. Ja nach Fertigungsmöglichkeit können dabei zur gegenseitigen Verbindung der Lagerschilde die freien Ränder der Augen in jeweils im Rastbolzen und Lagerzapfen angeordnete Ringnuten umgelegt oder aber Rastbolzen und Lagerzapfen können an ihren abgesetzten Enden mit den Lagerschilden vernietet werden. Beide Möglichkeiten führen zu einer stabilen Ausführung der Verschlussklappe.

Im Rahmen der genannten unterschiedlichen Fertigungsmöglichkeiten ist aber in vorteilhafter Weiterbildung der Erfindung auch ein Schwenklager verwendbar, das aus einem die gemeinsame Drehachse von Verschlussklappe und Doppelhaken bildenden, an einem Ende des Doppelhakens fest angeordneten Lagerzapfen und an den Lagerschilden angeordneten Lagerbohrungen gebildet ist, in denen die Lagerzapfenenden drehbar gehalten sind. Zweckmässig kann hierbei zur Minimierung des Montageaufwandes der Lagerzapfen des Schwenklagers einstückig an das der Gegenrast gegenüberliegende Ende des Doppelhakens angeformt sein. Der in Raststellung erfindungsgemäss gegen das Schwenklager elastisch verformbare Doppelhaken kann ferner als flaches Blechformteil ausgebildet und zweckmässig ein Stanzteil sein, er kann aber auch als ein Biegeteil aus Federdraht gefertigt sein.

Das hohe Mass an Zuverlässigkeit bei der erfindungsgemässen Schliesse gegen unerwünschtes Öffnen auch bei relativ grossen Zugkräften ist in vorteilhafter Weise dadurch erreicht, dass die an der Verschlussklappe angeordnete Rast mit der am freien Ende des Doppelhakens befindlichen Gegenrast in an sich bekannter Weise als radial wirkendes Federhebel-Rastgesperre in ein Überrasten des Doppelhakens ermöglichender Weise zusammenwirkt. In der Zugachse der Schliesse wirkende Kräfte erhöhen somit die Haltekraft der Schliesse in Raststellung und erst radial, d. h. senkrecht oder unter einem Winkel zur Zugachse gerichtete Kräfte, können die Haltekräfte zum Öffnen der Schliesse vermindern.

Konstruktiv besonders einfach gestaltet sich eine Ausführungsform für ein Federhebel-Rastgesperre, bei dem die Rast aus einem die Lagerschilde verbindenden Rastbolzen und die Gegenrast aus einer Rastkerbe oder einer Rastmulde am Doppelhaken besteht, wobei die Rastkerbe vorteilhaft etwa V-Form besitzt und an der Aussenperipherie des Doppelhakens angeordnet ist und zweckmässig einen Winkel von etwa 90° einschliesst.

Fertigungstechnisch besonders günstig ist es, wenn in weiterer Ausbildung der Erfindung die Verschlussklappe einstückig als U-förmiges Blechformteil, insbesondere als Prägestanzteil ausgebildet und durch den Lagerzapfen des Schwenklagers rahmenförmig geschlossen ist. Bei dieser Ausbildung lässt sich die Rast mit Vorteil in das dem Schwenklager gegenüberliegende Joch der Verschlussklappe integrieren etwa dadurch, dass die Rast aus einer aus dem Joch herausstehenden, nach innen umgelegten Zunge besteht, die eine im Querschnitt etwa dreieckförmige Rastnase bildet.

Nach einer Weiterbildung der Erfindung können die Seitenteile (Lagerschilde) der Verschlussklappe und der Doppelhaken in ihren Endbereichen jeweils eine in Raststellung überdeckende Lochung für eine Durchstecksicherung besitzen. Auch können die Seitenteile (Lagerschilde) der Verschlussklappe an ihren Aussenflächen als Schmuckbildner ausgebildet und/oder mit Steinen verziert sein. Hierdurch ist auch das ästhetische Erscheinungsbild der Schliesse an den Charakter ihrer Zweckbestimmung weitgehend anpassbar. Schliesslich können die Seitenteile (Lagerschilde) der Verschlussklappe mit Vorteil so geformt sein, dass sie in Raststellung die Hakenöffnungen des Doppelhakens ganz oder teilweise überdecken. Während bei vollständiger Überdeckung die Seitenteile sich besonders als Schmuckbildner eignen, muss bei Verwendung der Schliesse als Verbinder von Kettengliedern, Anschlussösen u. dgl. Vorsorge getroffen sein, dass die Anschlussösen nach dem Einhängen in die Haken die Schwenkbewegung der Schliessteile, insbesondere in die Raststellung, nicht behindern.

Zu diesem Zweck besteht nach einer weiteren vorteilhaften Ausgestaltung der Erfindung der Doppelhaken aus einem im Querschnitt etwa rechteckförmigen Profil und die Haken sind mit jeweils zwei an ihren den Seitenteilen zugekehrten Seiten spiegelbildlich und in der Zugachse angeordneten Ausnehmungen zum Einhängen und Sichern flacher Anschlussösen versehen. Günstig ist es, dass die Einhänge-Ausnehmungen etwa U-förmig ausgebildet sind und in ihrer spiegelbildlichen Zuordnung insgesamt eine H-Form bilden. Mit Vorteil ist die gegenseitige Bemessung und Tolerierung so gewählt, dass die Einhängeöffnungen der Anschlussösen analog dem Querschnittsprofil des Doppelhakens ausgebildet und so geformt sind, dass ihre Länge (X) etwa der Höhe (X') des Hakenprofils und ihre Breite (Y) etwa der grössten Breite (Y') des Hakenprofils sowie der Dicke (Y") des Steges zwischen den gegenüberliegenden Ausnehmungen entspricht. Diese Ausbildung ermöglicht es, dass die Einhängeösen in Offenstellung der Schliesse in deckungsgleicher Lage ihrer Einhängeöffnungen zum Querschnittsprofil des Doppelhakens in die Hakenöffnungen einführbar und durch eine anschliessende Schwenkbewegung innerhalb der Ausnehmungen um 90° in Verriegelungsstellung bringbar sind, welche in Raststellung des Doppelhakens durch Hakenüberdeckung der Seitenteile (Lagerschilde) erreichbar ist.

Die erfindungsgemässe Schliesse lässt vielfältige Verwendungsmöglichkeiten zu. Bei einer Verwendung als Ohranhänger beispielsweise kann die dem Rastgesperre benachbarte, aus der einen Hakenöffnung und den spiegelbildlich gerichteten Bogenteilen der Verschlussklappe gebildete Einhängeöffnung vorteilhafterweise grösser als die dem Schwenklager benachbarte Einhängeöffnung sein. Die Seitenwände können vorteilhaft einen in der Erstreckungsebene des Schwenklagers liegenden ovalen Rahmen bilden, welcher zweckmässig im Bereich grösster Breite des Ovals etwa parallele Abschnitte aufweist, die in einer die Gegenrast bildenden Dachform zusammengeführt sein können. Für die leichte Handhabung als Ohranhänger ist es günstig, dass Doppelhaken und Verschlussklappe als Biegeteile aus drahtförmigem Material bestehen.

Auch kann eine Ohrschmuckplatte auf die Seitenwände der Verschlussklappe im Bereich der grösseren Einhängeöffnung aufsteckbar sein und der diesem Aufsteckbereich gegenüberliegende Bereich des Doppelhakens kann in weiterer vorteilhafter Ausbildung mit einer weiteren fest angeordneten Ohrschmuckplatte versehen sein, die zweckmässig oval ausgebildet und so bemessen ist, dass die überkreuzende Schwenkbeweglichkeit von Doppelhaken und Verschlussklappe gewährleistet ist. Diese Ausbildung macht den Ohranhänger universell verwendbar, sowohl durch die mögliche Austauschbarkeit der Ohrschmuckplatten als auch durch seitenumgekehrtes Tragen am Ohr.

Nach einer bevorzugten Ausbildung der Schliesse kann diese in Raststellung und mit Blick auf die Schwenkebene im wesentlichen 8-Form aufweisen. Nach einer weiteren vorteilhaften Verwendung kann die Schliesse erfindungsgemäss als Schlüsselanhänger dienen.

Die Erfindung lässt zahlreiche Ausführungsformen und Verwendungsmöglichkeiten zu. Zur weiteren Verdeutlichung des Grundprinzips sind einige davon in den Zeichnungen beispielhaft dargestellt und anschliessend näher erläutert.

Es zeigen:

Fig. 1 eine Vorderansicht der erfindungsgemässen Schliesse und

Fig. 2 eine zugehörige Seitenansicht;

Fig. 3 eine weitere Ausführungsform der erfindungsgemässen Schliesse in Vorderansicht;

Fig. 4 eine Seitenansicht der Schliesse im teilweisen Schnitt nach Linie IV-IV in Fig. 3;

Fig. 5 eine weitere Ausführungsform der erfindungsgemässen Schliesse in Vorderansicht und

Fig. 6 die Schliesse im Schnitt nach Linie VI-VI in Fig. 5;

Fig. 7 eine weitere Ausführungsform der erfindungsgemässen Schliesse in Vorderansicht und

Fig. 8 eine zugehörige Seitenansicht;

Fig. 9 eine weitere Ausführungsform der erfindungsgemässen Schliesse in Vorderansicht und

Fig. 10 die Schliesse im Schnitt nach Linie X-X in Fig. 9;

Fig. 11, 12 u. 13 eine weitere Ausführungsform der erfindungsgemässen Schliesse als Ohranhänger in Vorder-, Seitenansicht und Draufsicht;

Fig. 14 eine weitere Ausführungsform der erfindungsgemässen Schliesse in Verschlussstellung mit eingehängten Teilen einer Perlenkette in Vorderansicht;

Fig. 15 und 16 die Schliesse nach Fig. 14 in Offenstellung und in Verschlussstellung (Seitenansicht);

Fig. 17 eine räumliche Darstellung des Doppelhakens der Schliesse nach den Fig. 14 bis 16 mit eingehängter Perlenöse und

Fig. 18 einen Blick in Richtung des Pfeiles XVIII in Fig. 17 auf den Haken.

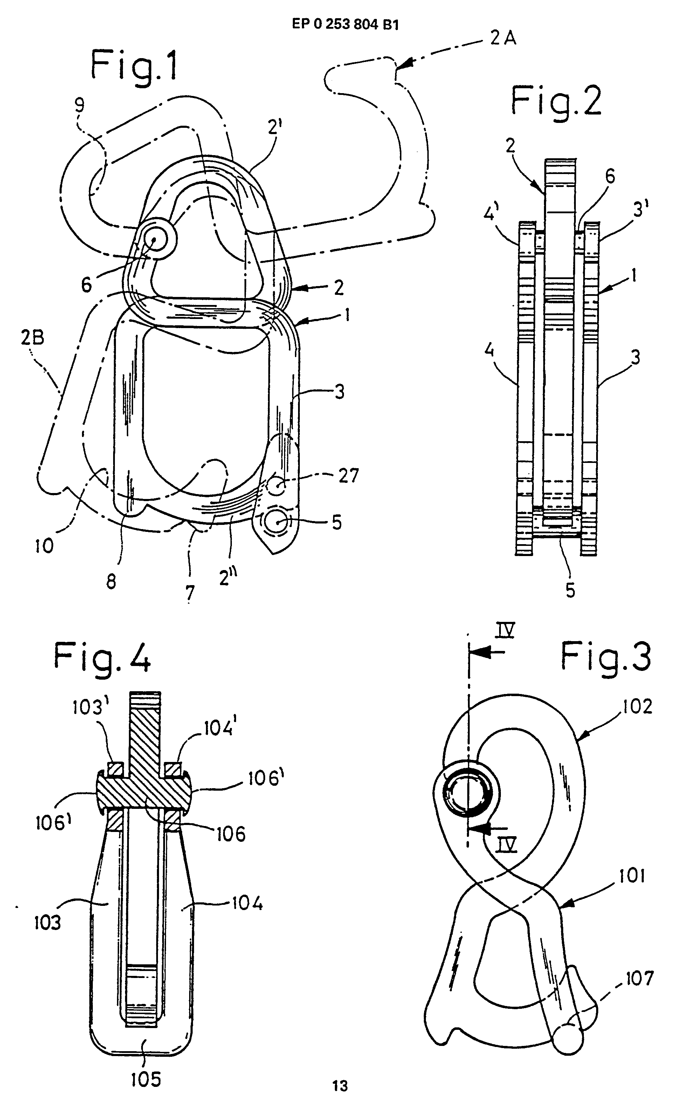

Die Fig. 1 und 2 zeigen in ausgezogenen Linien eine Schliesse im geschlossenen Zustand (Raststellung). Die Schliesse besteht im wesentlichen aus einer allgemein mit 1 bezeichneten Verschlussklappe und einem in sich federnd ausgebildeten Doppelhaken 2. Die Verschlussklappe 1 stellt ein relativ starres rahmenartiges Gebilde dar, bestehend aus zwei im parallelen Abstand, deckungsgleich zueinander angeordneten Seitenteilen 3, 4 in Form eines stilisierten S (Fig. 1) und einem Rastbolzen 5 sowie einem Lagerzapfen 6 zur starren Verbindung der Seitenteile-Enden. Die zugleich als Lagerschilde dienenden Seitenteile 3, 4 bilden im Bereich des Lagerzapfens 6 ein Schwenklager für den ebenfalls S-förmig ausgebildeten, aber spiegelbildlich zu der S-Form der Seitenteile mit dem Ende eines Hakens 2′ drehbar auf dem Zapfen 6 gelagerten Doppelhaken 2. Der Rastbolzen 5 bildet zusammen mit einer am Ende des anderen Hakens 2″ angeordneten Rastkerbe 7 ein radial wirkendes Federhebel-Rastgesperre, wobei der Doppelhaken den Federhebel darstellt. Mit einer am Haken 2″ befindlichen Handhabe 8 lässt sich der Doppelhaken durch elastisches Zusammendrücken des Doppelhakens in Richtung auf das Schwenklager mühelos in die Raststellung (Fig. 1 und 2) bringen und in umgekehrter Folge zum Öffnen der Schliesse. Dabei lassen sich Verschlussklappe 1 und Doppelhaken 2 um die durch den Lagerzapfen 6 gebildete Schwenkachse jeweils um 360° überkreuzend und überrastend drehen und in der Raststellung durch Schliessen zweier deckungsgleicher Löcher 27 mittels eines nicht dargestellten Sperrmittels verriegeln.

Die Wirkungsweise sei anhand der strichpunktiert gezeichneten Doppelhaken-Stellungen erklärt: Aus der geschlossenen (Rast-)Stellung der Schliesse wird der Doppelhaken zunächst in Drehrichtung entgegen dem Uhrzeigersinn entrastet und bis etwa in die mit 2 A bezeichnete Lage zum Einhängen eines (nicht dargestellten) Teils, z. B. eines Kettengliedes oder einer Öse, in die mit 9 bezeichnete Hakenöffnung geschwenkt. Eine anschliessende Schwenkung im Uhrzeigersinn mit Überrastung in die andere, mit 2 B bezeichnete, strichpunktiert dargestellte Lage dient zum Einhängen des anderen Teils in die andere Hakenöffnung 10. Mit erneuter Schwenkbewegung des Doppelhakens entgegen dem Uhrzeigersinn in die geschlossene Raststellung (Fig. 1 und 2) ist die Schliesse geschlossen. Analog in umgekehrter Reihenfolge vollzieht sich der Vorgang beim Öffnen der Schliesse. Aus der spiegelbildlichen Zuordnung von Verschlussklappe und Doppelhaken ergibt sich die aus den Fig. 1, 3, 5, 7 und 12 ersichtliche, je nach Grösse des Überdeckungsgrades der Seitenteile bezogen auf den Doppelhaken in Raststellung mehr oder minder stilisierte 8 (acht)-Form der Schliesse.

Bei den in den nachfolgend beschriebenen alternativen Ausführungsformen der erfindungsgemässen Schliesse sind gleiche oder äquivalente Teile zu der Ausführung gemäss Fig. 1 und 2 mit gleichen, jedoch um hundert bzw. mehrere hundert erhöhten Bezugsziffern versehen.

Die in den Fig. 3 und 4 gezeigte Schliesse ist aus drahtförmigem Material gefertigt. U-förmig gebogene Seitenteile 103, 104 der Verschlussklappe 101 mit einem den Rastbolzen 105 bildenden Joch besitzen flach gestauchte Enden 103′, 104′, die als Lageraugen zur Aufnahme des am Doppelhaken 102 einstückig angeformten Lagerzapfens 106 dienen. Dessen nach beiden Seiten austretende, als Schwenklager für den Doppelhaken 102 dienende Enden werden bei der Montage von Verschlussklappe 101 und Doppelhaken 102 mit angestauchten Köpfen 106′ zur Erzielung und Sicherung der Einteiligkeit der Schliesse und der freien und relativen Drehbeweglichkeit der beiden Schliessteile (101, 102) versehen.

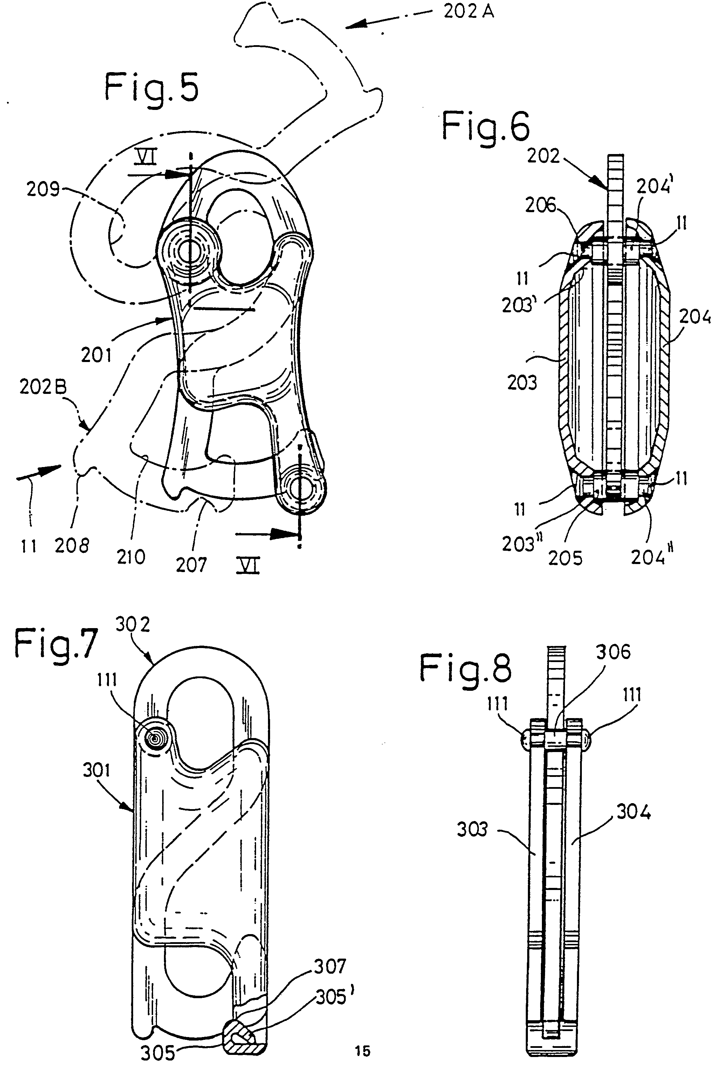

Bei der Schliesse nach Fig. 5 und 6 sind die Seitenteile 203, 204 der Verschlussklappe 201 schalenförmig als Gussteile oder durch Umformung erzeugte Blechteile (Formstanzteile) gefertigt. Angegossene bzw. angeformte Augen 203′, 204′ und 203″, 204″ im Bereich des Schwenklagers bzw. Rastgesperres dienen zur Aufnahme des Lagerzapfens 206 und Rastbolzens 205, mit denen die Seitenteile im parallelen Abstand zueinander verbunden sind und zwischen sich den freidrehbeweglich auf dem Lagerzapfen 206 gelagerten Doppelhaken 202 aufnehmen. Die Verbindung der Seitenteile ist eine Vernietung. Zu diesem Zweck greifen die jeweils im Durchmesser abgesetzten beiderseitigen Enden von Lagerzapfen 206 und Rastbolzen 205 in entsprechende Lochausnehmungen innerhalb der Augen, und ihre nach beiden Seiten austretenden Enden sind in jeweils trichterförmigen Ausbildungen der Lochausnehmungen bei 11 vernietet, wobei die Nietköpfe nachträglich oberflächenbündig zu den Seitenteilen 203, 204 abgeschliffen sind.

Der etwa wie die Zahl 5 und in sich federnd ausgebildete, um 360° mit Überrastung freidrehbewegliche Doppelhaken 202 ist mit seiner Rastkerbe 207 in Schliesslage kraftschlüssig am Rastbolzen 205 festgelegt (Raststellung). Er wird zum Einhängen von Anschlussösen, beispielsweise zum Verbinden zweier Kettenenden, durch Fingerdruck auf die Handhabe 208 in Pfeilrichtung 11 zunächst aus der Raststellung in Drehrichtung „im Uhrzeigersinn" in die mit 202 A bezeichnete Stellung geschwenkt – hier kann eine nicht dargestellte Öse in die Hakenöffnung 209 eingehängt werden –, und anschliessend wird der Doppelhaken in Drehrichtung „entgegen dem Uhrzeigersinn" bei gleichzeitiger Überrastung bis etwa in die strichpunktiert gezeichnete Stellung 202 B geschwenkt, zum Einhängen einer nicht dargestellten Öse in die andere Hakenöffnung 210.

Bei dem weiteren Ausführungsbeispiel einer Schliesse nach den Fig. 7 und 8 ist Verschlussklappe 301 ähnlich wie in den Fig. 3 und 4 als U-förmiges kombiniertes Stanz-Biegeteil aus Blech ausgeführt, mit den Seitenteilen 303, 304. Der S-förmig in sich federnd ausgebildete Doppelhaken 302 ist mit Hilfe des Lagerzapfens 306 an den freien Enden der Seitenteile 303, 304 schwenkbeweglich gelagert und durch Kopfnietung der beiderseits über die Seitenteile austretenden Lagerzapfenenden bei 111 drehbar und axial festgelegt. Das Rastgesperre für die Verrastung des Doppelhakens mit der Verschlussklappe besteht aus einer an der äusseren Hakenperipherie angeordneten Rastmulde 307 und einer Rastnase 305, die aus einer aus dem Joch der U-förmigen Verschlussklappe herausstehenden und nach innen umgelegten Zunge 305' gebildet ist.

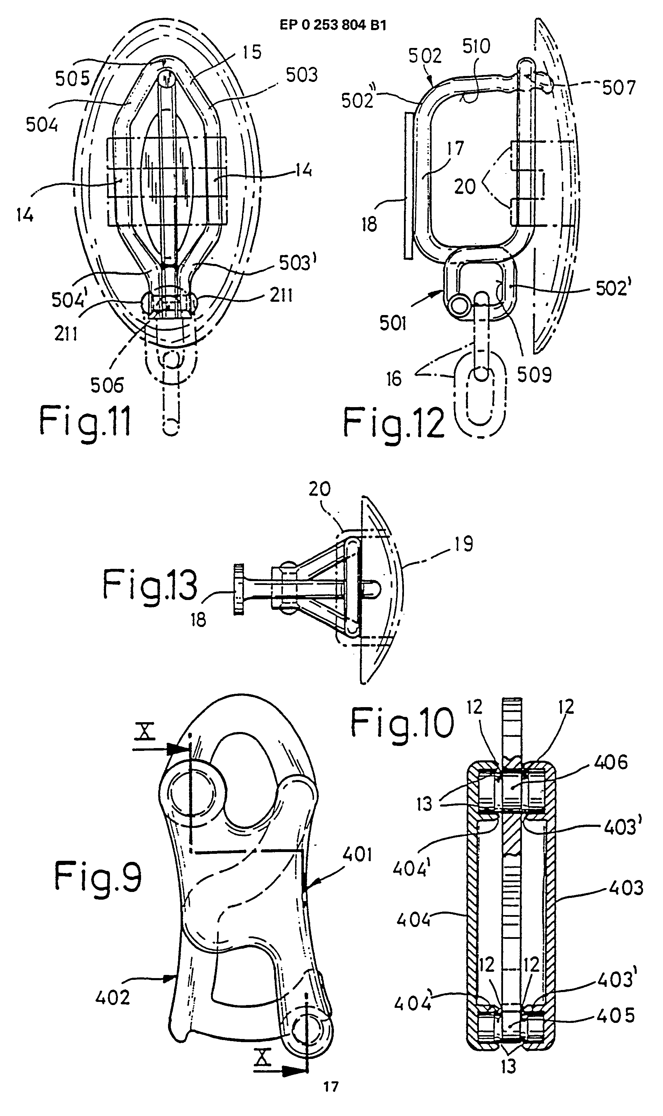

Die in den Fig. 9 und 10 dargestellte Schliesse besitzt eine Verschlussklappe 401, die ähnlich derjenigen nach Fig. 5, 6 aufgebaut ist, bestehend aus schalenförmigen Seitenteilen 403, 404, die über einen in angeformten Augen 403', 404' aufgenommenen Lagerzapfen 406 und Rastbolzen 405 in parallelem Abstand zueinander festgelegt sind und zwischen sich den auf dem Lagerzapfen drehbar gelagerten Doppelhaken 402 aufnehmen. Rastbolzen 405 und Lagerzapfen 406 sind mit je zwei im Abstand von etwa der Dicke des Doppelhakens 402 benachbarten Ringnuten 12 versehen, in welche die freien Ränder der Augen 403', 404' bei 13 die Seitenteile beabstandend umgelegt sind.

Bei der als Ohranhänger konzipierten Schliesse nach den Fig. 11 bis 13 sind die Verschlussklappe 501 und der Doppelhaken 502 als Formbiegeteile aus Draht ausgeführt. Die Verschlussklappe ist in einer der Papierebene entsprechenden Ebene S-förmig und in einer 90° dazu gedrehten senkrechten Ebene ovalförmig ausgebildet. Hierbei ist ausgehend von dem gemeinsamen, Verschlussklappe 501 und Doppelhaken 502 verbindenden Schwenklager, das von dem Lagerzapfen 506 mit umgeformten Nietköpfen 211 und den abgeflachten und/oder als Öse geformten Enden 503', 504 des die Seitenteile 503, 504, einschliessenden Drahtbügels (Verschlussklappe 501) gebildet wird, zunächst ein divergierender Abschnitt der Drahtenden 503', 504' vorhanden, der in parallele Abschnitte 14 übergeht und in einem dachförmigen Abschnitt 15 mündet, welcher in seinem Scheitel die Rast 505 für die am freien Ende des Doppelhakens 502 angeformte Gegenrast in Form der Rastnut 507 bildet, die zweckmässig durch eine Kröpfung des in sich federnd ausgebildeten freien Endes des Doppelhakens 502 erzeugt wird. Der im Schwenklager auf den Lagerzapfen 506 zwischen den Drahtenden 503', 504' mittels einer Drahtöse drehbar gelagerte S-förmige Doppelhaken 502 besitzt im Bereich des Schwenklagers eine kleine Hakenöffnung 509, die zusammen mit dem – in Seitenansicht – spiegelbildlich ausgebildeten Abschnitt 503', 504' der Verschlussklappe 501 eine Einhängeöffnung für ein nicht näher dargestelltes, etwa an mit 16 angedeuteten Ösen befestigtes Ohrschmuckgehänge dienen kann und im Bereich des Rastgesperres (505, 507) eine vergleichbar grössere Hakenöffnung 510 zum Einhängen der Schliesse in ein Loch des Ohrläppchens.

Die einzelnen Haken 502' und 502" des S-förmigen Doppelhakens 502 sind etwa U-förmig gebogen und an der Basis 17 des grösseren Hakens 502" ist eine ovale, als Schmuckbildner dienende Ohrschmuckplatte 18 angelötet, die natürlich – wie Fig. 11 deutlich macht – so bemessen sein muss, dass sie die durch die lichte Weite des von der Verschlussklappe gebildeten Rahmens bestimmten Abmessungen nicht übersteigt, um die relative überkreuzende Schwenkbeweglichkeit von Doppelhaken und Verschlussklappe nicht zu beeinträchtigen. Es ist ferner möglich, eine oder im Austausch unterschiedliche Ohrschmuckplatten 19 mit an ihrer Rückseite befindlichen Laschen 20 wahlweise auf die zueinander parallelen Seitenteilabschnitte 14 der Verschlussklappe 501 aufzustecken, so dass die Ohranhänger-Schliesse – je nachdem, ob sie von hinten oder von vorn in das Ohrläppchen eingebracht wird – mit unterschiedlichstem schmuckbildnerischem Aussehen am Ohr getragen werden kann.

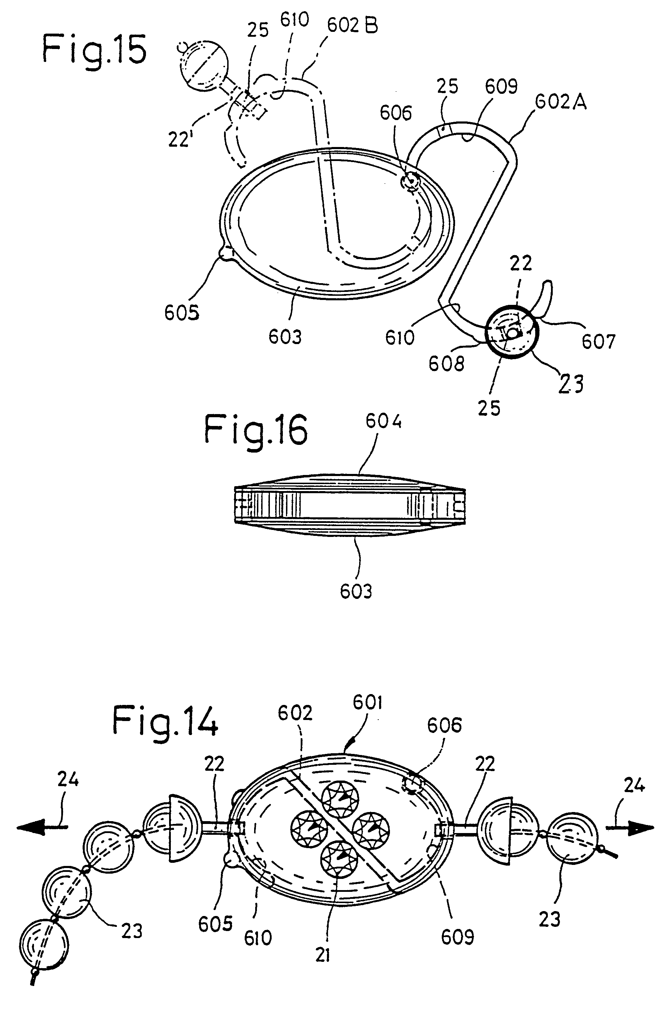

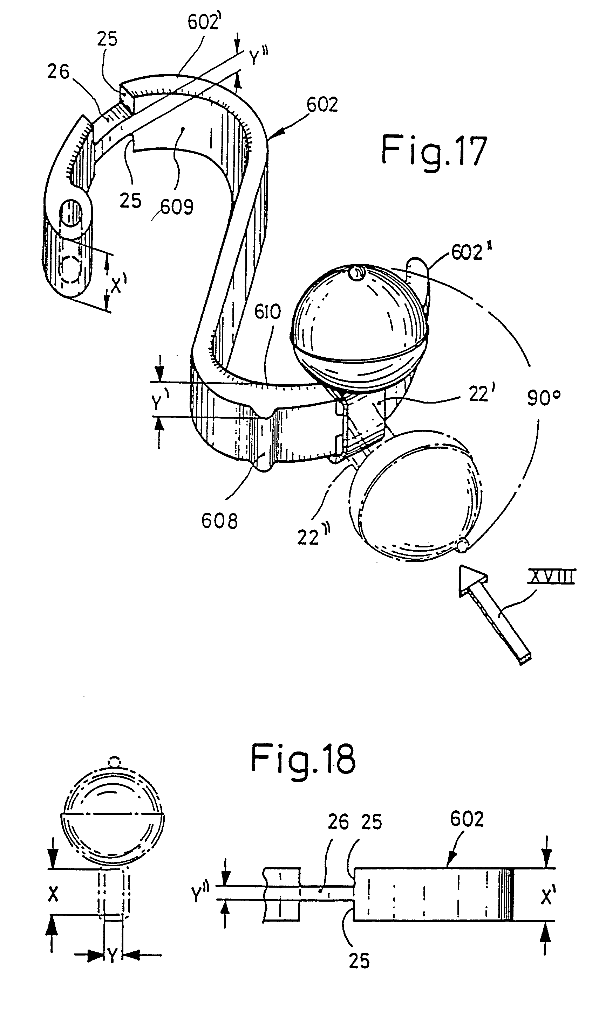

Bei der in den Fig. 14 bis 18 dargestellten Schliesse sind die schalenförmigen Seitenteile 603, 604 der Verschlussklappe 601 als Schmuckbildner gestaltet und ganz oder teilweise mit Edelsteinen 21 besetzt. Die Seitenteile 603, 604 sind durch den Lagerzapfen 606 und den Rastbolzen 605 im parallelen Abstand fest miteinander verbunden und sie überdecken die Hakenöffnungen 609, 610 in Raststellung (Fig. 14) vollständig. Diese vollständige Überdeckung macht es notwendig, dass Anschlussösen 22 beispielsweise an den Enden einer teilweise dargestellten Perlenkette 23 im Einhängezustand die freie Schwenkbeweglichkeit des Doppelhakens zwischen den Seitenteilen der Verschlussklappe nicht beeinträchtigen. Zu diesem Zweck besitzt der Doppelhaken 602 an den den Seitenteilen zugekehrten Seiten jedes Hakens 602', 602'' im Bereich der Zugachse 24 (Fig. 14) spiegelbildlich gegenüberliegende, etwa U-förmige Ausnehmungen 25, die durch einen Steg 26 getrennt sind und insgesamt zusammen mit dem Steg 26 eine H-Form bilden. Doppelhaken 602 und Anschlussösen 22 haben etwa gleiches rechteckförmiges Querschnittsprofil bzw. Einhängeöffnungen. Dabei sind die korrespondierenden Abmessungen, wie insbesondere die Fig. 17, 18 zeigen, so gewählt, dass die Länge X der Einhängeöffnungen der Anschlussösen 22 etwa der Höhe X' des Doppelhakenprofils und ihre Breite Y etwa der grössten (einschliesslich der Handhabe 608 gemessenen) Breite Y' des Hakenprofils sowie der Dicke Y'' des Steges 26 entspricht.

Zum Verbinden der Enden einer Perlenkette wird in Offenstellung der Schliesse (Fig. 15) zunächst die eine Anschlussöse 22 in Stellung „senkrecht zur Papierebene" in den Doppelhaken 602 (A) bis hin zur Hakenöffnung 609 in die Ausnehmungen 25 eingehängt und dort um 90° gedreht. Anschliessend wird der Doppelhaken innerhalb der Verschlussklappe mit seiner Rastmulde 607 den Rastbolzen 605 überrastend in die strichpunktiert gezeichnete Stellung 602 B geschwenkt und die andere Anschlussöse 22' in gleicher Weise wie vorher beschrieben in die Hakenöffnung 610 und die dortigen Ausnehmungen 25 eingehängt (Fig. 17), um 90° wie strichpunktiert gezeichnet (22'') gedreht und anschliessend der Doppelhaken 602 zurück in Raststellung gebracht (Fig. 14). Auf diese Weise sind die Enden der Perlenkette zuverlässig verbunden.

Die erfindungsgemässe Schliesse ist auf die beschriebenen Anwendungsfälle nicht beschränkt, sondern lässt sich, ohne den Rahmen der Erfindung zu sprengen, in ähnlicher Weise, z. B. als Schlüsselanhänger, weiterbilden.

**Patentansprüche**

1. Einteilige Schliesse, insbesondere für Schmuckwaren, aus zwei an ihrem einen Ende in einer gemeinsamen Drehachse schwenkbar gelagerten und an ihren anderen Enden lösbar verbindbaren Schliessteilen, dadurch gekennzeichnet, dass ein Schliessteil aus einem in sich federnd ausgebildeten Doppelhaken (2, 102, 202, 302, 402, 502, 602) mit spiegelbildlich beiderseits der Zugachse (24) entgegengesetzt gerichteten Hakenöffnungen (9, 10, 609, 610) besteht und mit einem Hakenende an einer das andere Schliessteil bildenden Verschlussklappe (1, 101, 201, 301, 401, 501, 601) angelenkt und mit seinem anderen Ende über eine Rast (5 ... 605) und eine Gegenrast (7 ... 607) an der Verschlussklappe kraftschlüssig festlegbar ist, wobei Doppelhaken (2 ... 602) und Verschlussklappe (1 ... 601) zum Öffnen und Schliessen um 360° überkreuzend schwenkbar und so ausgebildet sind, dass eine Schwenkbewegung in einer Richtung jeweils eine Hakenöffnung (9 ... 609) öffnet und die andere (10 ... 610) schliesst und umgekehrt.

2. Schliesse nach Anspruch 1, dadurch gekennzeichnet, dass durch die ausrastende Schwenkbewegung des Doppelhakens (2, 102, ... 602) in einer Richtung die eine (9 ... 609) und durch die überrastende Schwenkbewegung in der anderen Richtung die andere Hakenöffnung (10 ... 610) öffenbar ist.

3. Schliesse nach den Ansprüchen 1 und 2, dadurch gekennzeichnet, dass die Verschlussklappe (1, 101 ... 601) spiegelbildlich zu den Hakenöffnungen (9, 10 ... 609, 610) des Doppelhakens (2 ... 602) gerichtete Bogenabschnitte aufweist, die in Raststellung der Schliesse die Hakenöffnungen schliessen.

4. Schliesse nach den Ansprüchen 1 bis 3, dadurch gekennzeichnet, dass die Verschlussklappe (1, 101, 201, 301, 401) als U-förmiger Bügel ausgebildet ist, der mit seinen freien Enden ein gemeinsames Schwenklager (6, 106 ... 406) mit einem Ende des Doppelhakens (2, 102 ... 402) bildet und diesen torförmig umschliesst, und dass am Bügeljoch eine Rast (5, 105 ... 405) angeordnet ist, die mit einer am anderen Ende des Doppelhakens befindlichen Gegenrast (7, 107 ... 407) beim Öffnen und Schliessen zusammenwirkt.

5. Schliesse nach den Ansprüchen 1 bis 4, dadurch gekennzeichnet, dass die Rast (5, 105 ... 605) und das Schwenklager (6, 106 ... 606) von sich gegenüberliegenden Seiten eines rahmenartigen Gehäuses (Verschlussklappe) gebildet sind, dessen andere beide Rahmenseiten (3, 4, 103, 104 ... 603, 604) verlängerte Lagerschilde des Schwenklagers bilden.

6. Schliesse nach den Ansprüchen 1 bis 5, dadurch gekennzeichnet, dass das Schwenklager aus einem die gemeinsame Drehachse von Verschlussklappe (1, 101 ... 601) und Doppelhaken (2, 102 ... 602) bildenden Lagerzapfen (6, 106 ... 606) mit an den Zapfenenden festgelegten Lagerschilden (3, 4, 103, 104 ... 603, 604) und einem Ende des in einer Lagerbohrung freidrehbeweglich zwischen den Lagerschilden gelagerten Doppelhakens besteht.

7. Schliesse nach Anspruch 6, dadurch gekennzeichnet, dass die Lagerschilde (3, 4, 103, 104, 303, 304) aus in parallelem Abstand zueinander angeordneten flachen Formteilen gebildet sind.

8. Schliesse nach Anspruch 6, dadurch gekennzeichnet, dass die Lagerschilde (203, 204, 403, 404) der Verschlussklappe schalenförmig ausgebildet und mit Ausnehmungen zur Aufnahme der Rast und des Lagerzapfens versehen sind.

9. Schliesse nach Anspruch 8, dadurch gekennzeichnet, dass die Lagerschilde (3, 4, 103, 104, 203, 204, 403, 404, 503, 504) als Gussteil oder Blechformteil ausgebildet und als Ausnehmungen jeweils angegossene bzw. angeformte Augen (3', 4', 103', 104', 203', 204', 403', 404', 503', 504') vorgesehen sind.

10. Schliesse nach den Ansprüchen 8 und 9 und einem oder mehreren der übrigen Ansprüche, dadurch gekennzeichnet, dass die Lagerschilde (3, 4 ... 603, 604) über einen in jeweils gegenüberliegende Augen eingesetzten Lagerzapfen (6 ... 606) und Rastbolzen (5 ... 605) im parallelen Abstand miteinander verbunden sind.

11. Schliesse nach Anspruch 10, dadurch gekennzeichnet, dass zur festen gegenseitigen Verbindung der Lagerschilde (403, 404) die freien Ränder (13) der Augen (403', 404') in jeweils im Rastbolzen (405) und Lagerzapfen (406) angeordnete Ringnuten (12) umlegbar sind.

12. Schliesse nach Anspruch 10, dadurch gekennzeichnet, dass Rastbolzen (205) und Lagerzapfen (206) an ihren abgesetzten Enden mit den Lagerschilden (203, 204) vernietet (11) sind.

13. Schliesse nach den Ansprüchen 1 bis 5, dadurch gekennzeichnet, dass das Schwenklager aus einem die gemeinsame Drehachse von Verschlussklappe (101) und Doppelhaken (102) bildenden, an einem Ende des Doppelhakens fest angeordneten Lagerzapfen (106) und an den Lagerschilden (103, 104) angeordneten Lagerbohrungen gebildet ist, in denen die Lagerzapfenenden drehbar gehalten sind.

14. Schliesse nach Anspruch 13, dadurch gekennzeichnet, dass der Lagerzapfen (106) des Schwenklagers einstückig an das der Gegenrast (107) gegenüberliegende Ende des Doppelhakens (102) angeformt ist.

15. Schliesse nach den Ansprüchen 1 bis 14, dadurch gekennzeichnet, dass der Doppelhaken (2 ... 602) in Raststellung gegen das Schwenklager (6 ... 606) elastisch verformbar ist.

16. Schliesse nach Anspruch 15, dadurch gekennzeichnet, dass der Doppelhaken (2, 302) als flaches Blechformteil ausgebildet, insbesondere ein Stanzteil ist.

17. Schliesse nach den Ansprüchen 14 und 15, dadurch gekennzeichnet, dass der Doppelhaken (102, 502) ein Biegeteil aus Federdraht ist.

18. Schliesse nach Anspruch 1 und einem oder mehreren der übrigen Ansprüche, dadurch gekennzeichnet, dass die an der Verschlussklappe (1 ... 601) angeordnete Rast (5 ... 605) mit der am freien Ende des Doppelhakens (2 ... 602) befindlichen Gegenrast (7 ... 607) in an sich bekannter Weise als radial wirkendes Federhebel-Rastgesperre in ein Überrasten des Doppelhakens ermöglichender Weise zusammenwirkt.

19. Schliesse nach den Ansprüchen 4 und 18, dadurch gekennzeichnet, dass die Rast aus einem die Lagerschilde (3, 4, 203, 204, 403, 404, 603, 604) verbindenden Rastbolzen (5, 205, 405, 605) und die Gegenrast aus einer Rastkerbe (7, 207, 407, 607) besteht.

20. Schliesse nach den Ansprüchen 18 und 19, dadurch gekennzeichnet, dass die Gegenrast aus einer Rastmulde (107, 307, 507) besteht.

21. Schliesse nach den Ansprüchen 18 und 19, dadurch gekennzeichnet, dass die Rastkerbe (7, 207, 407, 607) etwa V-Form besitzt und an der Aussenperipherie des Doppelhakens (2, 202, 402, 602) angeordnet ist.

22. Schliesse nach Anspruch 21, dadurch gekennzeichnet, dass die V-Form der Rastkerbe einen Winkel von etwa 90° einschliesst.

23. Schliesse nach den Ansprüchen 1 bis 5, 18 und einem oder mehreren der übrigen Ansprüche, dadurch gekennzeichnet, dass die Verschlussklappe (101, 301, 501) einstückig als U-förmiges Blechformteil, insbesondere als Prägestanzteil ausgebildet und durch den Lagerzapfen (106, 306, 506) des Schwenklagers rahmenförmig geschlossen ist.

24. Schliesse nach Anspruch 23, dadurch gekennzeichnet, dass die Rast (105, 305, 505) in das dem Schwenklager gegenüberliegende Joch der Verschlussklappe integriert ist.

25. Schliesse nach den Ansprüchen 23 und 24, dadurch gekennzeichnet, dass die Rast (305) aus einer aus dem Joch herausstehenden, nach innen umgelegten Zunge (307) besteht, die eine im Querschnitt etwa dreieckförmige Rastnase bildet.

26. Schliesse nach Anspruch 1 und einem oder mehreren der übrigen Ansprüche, dadurch gekennzeichnet, dass die Seitenteile (Lagerschilde) (3, 4, 103, 104 ... 603, 604) der Verschlussklappe und der Doppelhaken in ihren Endbereichen jeweils eine in Raststellung überdeckende Lochung (27) für eine Durchstecksicherung besitzen.

27. Schliesse nach Anspruch 1 und einem oder mehreren der übrigen Ansprüche, dadurch gekennzeichnet, dass die Seitenteile (Lagerschilde) (3, 4 ... 603, 604) der Verschlussklappe (1 ... 601) an ihren Aussenflächen als Schmuckbildner ausgebildet und/oder mit Steinen (21) verziert sind.

28. Schliesse nach Anspruch 1 und einem oder mehreren der übrigen Ansprüche, dadurch gekennzeichnet, dass die Seitenteile (Lagerschilde) (3, 4 ... 603, 604) der Verschlussklappe (1 ... 601) so geformt sind, dass sie in Raststellung die Hakenöffnungen (9, 10 ... 609, 610) des Doppelhakens (2 ... 602) ganz oder teilweise überdecken.

29. Schliesse nach Anspruch 28, dadurch gekennzeichnet, dass der Doppelhaken (2, 102, 202, 302, 402, 602) aus einem im Querschnitt etwa rechteckförmigen Profil besteht und die Haken mit jeweils zwei an ihren den Seitenteilen zugekehrten Seiten spiegelbildlich und in der Zugachse (24) angeordneten Ausnehmungen (25) zum Einhängen und Sichern flacher Anschlussösen (22) versehen sind.

30. Schliesse nach den Ansprüchen 28 und 29, dadurch gekennzeichnet, dass die Einhänge-Ausnehmungen (25) etwa U-förmig ausgebildet sind und in ihrer spiegelbildlichen Zuordnung insgesamt eine H-Form bilden.

31. Schliesse nach den Ansprüchen 29 und 30, dadurch gekennzeichnet, dass die Einhängeöffnungen der Anschlussösen (22) analog dem Querschnittsprofil des Doppelhakens (602) ausgebildet und so geformt sind, dass ihre Länge (X) etwa der Höhe (X') des Hakenprofils und ihre Breite (Y) etwa der grössten Breite (Y') des Hakenprofils sowie der Dicke (Y") des Steges (26) zwischen den gegenüberliegenden Ausnehmungen (25) entspricht.

32. Schliesse nach den Ansprüchen 28 bis 31, dadurch gekennzeichnet, dass die Einhängeösen (22) in Offenstellung der Schliesse in deckungsgleicher Lage ihrer Einhängeöffnungen zum Querschnittsprofil des Doppelhakens (602) in die Hakenöffnungen (609, 610) einführbar und durch eine anschliessende Schwenkbewegung innerhalb der Ausnehmungen (25) um 90° in Verriegelungsstellung bringbar sind, welche in Raststellung des Doppelhakens (602) durch Hakenüberdeckung der Seitenteile (Lagerschilde) (603, 604) erreichbar ist.

33. Schliesse nach Anspruch 1 und einem oder mehreren der übrigen Ansprüche, gekennzeichnet durch ihre Verwendung als Ohranhänger.

34. Schliesse nach Anspruch 33, dadurch gekennzeichnet, dass die dem Rastgesperre benachbarte, aus der einen Hakenöffnung und den spiegelbildlich gerichteten Bogenteilen der Verschlussklappe (501) gebildete Einhängeöffnung (510) grösser als die dem Schwenklager benachbarte Einhängeöffnung (509) ist.

35. Schliesse nach Anspruch 34, dadurch gekennzeichnet, dass die Seitenwände (503, 504) der Verschlussklappe (501) einen in der Erstreckungsebene des Schwenklagers liegenden ovalen Rahmen bilden.

36. Schliesse nach Anspruch 35, dadurch gekennzeichnet, dass der Rahmen im Bereich grösster Breite des Ovals etwa parallele Abschnitte (14) aufweist.

37. Schliesse nach den Ansprüchen 34 bis 36, dadurch gekennzeichnet, dass die parallelen Seitenwand-Abschnitte (14) in einer die Gegenrast (505) bildenden Dachform (15) zusammengeführt sind.

38. Schliesse nach den Ansprüchen 33 bis 37, dadurch gekennzeichnet, dass Doppelhaken (502) und Verschlussklappe (501) als Biegeteile aus drahtförmigem Material bestehen.

39. Schliesse nach den Ansprüchen 33 bis 38 und einem oder mehreren der übrigen Ansprüche, dadurch gekennzeichnet, dass eine Ohrschmuckplatte (19) auf die Seitenwände (503, 504) der Verschlussklappe (501) im Bereich der grösseren Einhängeöffnung (510) aufsteckbar ist.

40. Schliesse nach den Ansprüchen 33 bis 39, dadurch gekennzeichnet, dass der dem Aufsteckbereich für die Ohrschmuckplatte (19) an der Verschlussklappe (501) gegenüberliegende Bereich des Doppelhakens (502) mit einer weiteren fest angeordneten Ohrschmuckplatte (18) versehen ist.

41. Schliesse nach Anspruch 40, dadurch gekennzeichnet, dass die weitere Ohrschmuckplatte (18) oval ausgebildet und so bemessen ist, dass die überkreuzende Schwenkbeweglichkeit des Doppelhakens (502) mit der Verschlussklappe (501) gewährleistet ist.

42. Schliesse nach Anspruch 1 und einem oder mehreren der vorhergehenden Ansprüche, dadurch gekennzeichnet, dass diese in Raststellung und mit Blick auf die Schwenkebene im wesentlichen 8-Form aufweist.

43. Schliesse nach einem oder mehreren der vorhergehenden Ansprüche, gekennzeichnet durch ihre Anwendung als Schlüsselanhänger.

## Claims

1. A one-part fastener, particularly for jewelry, consisting of two fastening portions which are mounted for pivoting in a common axis of rotation at their one end and can be detachably connected at their other ends, characterised in that one fastening portion consists of a double hook (2, 102, 202, 302, 402, 502, 602) which is of inherently resilient construction with hook openings (9, 10, 609, 610) directed oppositely in mirror image at both sides of the tension axis (24) and having one hook end articulated on a hinged locking means (1, 101, 201, 301, 401, 501, 601) forming the other fastening portion and being able to be frictionally secured in position on the hinged locking means by its other end through a detent (5 ... 605) and a counter detent (7 ... 607), double hook (2 ... 602) and hinged locking means (1 ... 601) being pivotable through 360° crossing over for the opening and closing and being so constructed that a pivotal movement in one direction opens one hook opening (9 ... 609) and closes the other (10 ... 610) and vice versa.

2. A fastener as claimed in Claim 1, characterised in that the one hook opening (9 ... 609) can be opened by the pivotal movement of the double hook (2, 102 ... 602) in one direction, disengaging it from the detent, and the other hook opening (10 ... 610) can be opened by the pivotal movement in the other direction, passing over the detent.

3. A fastener as claimed in Claims 1 and 2, characterised in that the hinged locking means (1, 101 ... 601) comprises arcuate portions which are directed in mirror image to the hook openings (9, 10 ... 609, 610) of the double hook (2 ... 602) and close the hook openings when the fastener is in the snap-in position.

4. A fastener as claimed in Claims 1 to 3, characterised in that the hinged locking means (1, 101, 201, 301, 401) is constructed in the form of a U-shaped yoke which, with its free ends, forms a common pivot bearing (6, 106 ... 406) with one end of the double hook (2, 102 ... 402) and surrounds this in the form of a gate, and that disposed on the crosspiece of the yoke is a detent (5, 105 ... 405) which cooperates with a counter detent (7, 107 ... 407) on the other end of the double hook during the opening and closing.

5. A fastener as claimed in Claims 1 to 4, characterised in that the detent (5, 105 ... 605) and the pivot bearing (6, 106 ... 606) are formed from opposite sides of a framelike housing (hinged locking means), the other two frame sides (3, 4, 103, 104 ... 603, 604) of which form extended bearing end plates of the pivot bearing.

6. A fastener as claimed in Claims 1 to 5, characterised in that the pivot bearing consists of a pivot pin (6, 106 ... 606) forming the common axis of rotation of hinged locking means (1, 101 ... 601) and double hook (2, 102 ... 602), with bearing end plates (3, 4, 103, 104 ... 603, 604) located on the ends of the pin and one end of the double hook mounted between the bearing end plates for free rotational movement in a bearing bore.

7. A fastener as claimed in Claim 6, characterised in that the bearing end plates (3, 4, 103, 104, 303, 304) are formed from flat shaped parts disposed with parallel spacing apart.

8. A fastener as claimed in Claim 6, characterised in that the bearing end plates (203, 204, 403, 404) of the hinged locking means are of dished construction and are provided with recesses to receive the detent and the pivot pin.

9. A fastener as claimed in Claim 8, characterised in that the bearing end plates (3, 4, 103, 104, 203, 204, 403, 404, 503, 504) are constructed in the form of castings or shaped sheet-metal parts, and eyes (3′, 4′, 103′, 104′, 203′, 204′, 403′, 404′, 503′, 504′) which are cast integral or formed thereon are provided as recesses in each case.

10. A fastener as claimed in Claims 8 and 9 and one or more of the other Claims, characterised in that the bearing end plates (3, 4 ... 603, 604) are connected to one another, with parallel spacing, through a pivot pin (6 ... 606) and detent pin (5 ... 605) each inserted in opposite eyes.

11. A fastener as claimed in Claim 10, characterised in that the free edges (13) of the eyes (403′, 404′) can be bent over into annular grooves (12) provided both in the detent pin (404) and in the pivot pin (406) for the rigid mutual connection of the bearing end plates (403, 404).

12. A fastener as claimed in Claim 10, characterised in that detent pin (205) and pivot pin (206) are riveted (11) to the bearing end plates (203, 204) at their offset ends.

13. A fastener as claimed in Claims 1 to 5, characterised in that the pivot bearing is formed from a pivot pin (106), which forms the common axis of rotation of hinged locking means (101) and double hook (102) and is fixed at one end of the double hook, and bearing bores which are provided in the bearing end plates (103, 104) and in which the ends of the pivot pin are held for rotation.

14. A fastener as claimed in Claim 13, characterised in that the pivot pin (106) of the pivot bearing is formed integral on the end of the double hook (102) opposite to the counter detent (107).

15. A fastener as claimed in Claims 1 to 14, characterised in that, in the snap-in position, the double hook (2 ... 602) is resiliently deformable in relation to the pivot bearing (6 ... 606).

16. A fastener as claimed in Claim 15, characterised in that the double hook (2, 302) is constructed in the form of a flat shaped sheet-metal part, particularly a stamped part.

17. A fastener as claimed in Claims 14 and 15, characterised in that the double hook (102, 502) is a bent part made of spring wire.

18. A fastener as claimed in Claim 1 and one or more of the other Claims, characterised in that the detent (5 ... 605) disposed on the hinged locking means (1 ... 601) cooperates with the counter detent (7 ... 607) on the free end of the double hook (2 ... 602) in a manner known per se, as a radially acting spring-lever detent catch in a manner rendering it possible for the double hook to pass over the detent.

19. A fastener as claimed in Claims 4 and 18, characterised in that the detent consists of a detent pin (5, 205, 405, 605) connecting the bearing end plates (3, 4, 203, 204, 403, 404, 603, 604) and the counter detent consists of a detent notch (7, 207, 407, 607).

20. A fastener as claimed in Claims 18 and 19, characterised in that the counter detent consists of a detent depression (107, 307, 507).

21. A fastener as claimed in Claims 18 and 19, characterised in that the detent notch (7, 207, 407, 607) is substantially V-shaped and is provided at the outer periphery of the double hook (2, 202, 402, 602).

22. A fastener as claimed in Claim 21, characterised in that the V-shape of the detent notch forms an angle of about 90°.

23. A fastener as claimed in Claims 1 to 5, 18 and one or more of the other Claims, characterised in that the hinged locking means (101, 301, 501) is made in one piece as a U-shaped sheet-metal part, particularly as a stamped part and is closed in the form of a frame by the pivot pin (106, 306, 506) of the pivot bearing.

24. A fastener as claimed in Claim 23, characterised in that the detent (105, 305, 505) is integrated in the crosspiece of the hinged locking means, situated opposite to the pivot bearing.

25. A fastener as claimed in Claims 23 and 24, characterised in that the detent (305) consists of a tongue (307) which projects from the crosspiece and is folded over inwards and which forms a detent projection which is substantially triangular in cross-section.

26. A fastener as claimed in Claim 1 and one or more of the other Claims, characterised in that the side portions (bearing end plates) (3, 4, 103, 104 ... 603, 604) of the hinged locking means and the double hook each have, in their end regions, holes (27) which coincide in the snap-in position, for an inserted safety device.

27. A fastener as claimed in Claim 1 and one or more of the other Claims, characterised in that the side portions (bearing end plates) (3, 4 ... 603, 604) of the hinged locking means (1 ... 601) are constructed in the form of ornaments at their outer faces and/or are decorated with jewels (21).

28. A fastener as claimed in Claim 1 and one or more of the other Claims, characterised in that the side portions (bearing end plates) (3, 4 ... 603, 604) of the hinged locking means (1 ... 601) are so shaped that, in the snap-in position, they wholly or partially cover the hook openings (9, 10 ... 609, 610) of the double hook (2 ... 602).

29. A fastener as claimed in Claim 28, characterised in that the double hook (2, 102, 202, 302, 402, 602) consists of a profile which is substantially rectangular in cross-section and the hooks are each provided with two recesses (25) which are disposed in the tension axis (24) and in mirror image at their sides adjacent to the side portions, for attaching and securing flat connecting links (22).

30. A fastener as claimed in Claims 28 and 29, characterised in that the suspension recesses (25) are substantially U-shaped in construction and, as a whole in their mirror image relationship, form an H shape.

31. A fastener as claimed in Claims 29 and 30, characterised in that the suspension openings of the connecting links (22) are similar in construction to the cross-section of the double hook (602) and are shaped so that their length (X) corresponds substantially to the height (X') of the hook profile and their width (Y) corresponds substantially to the maximum width (Y') of the hook profile and the thickness (Y'') of the web (26) between the opposite recesses (25).

32. A fastener as claimed in Claims 28 to 31, characterised in that, when the fastener is in the open position, the suspension links (22) can be introduced into the hook openings (609, 610) with their suspension openings coinciding in position with the cross-section of the double hook (602) and can be brought, by a subsequent pivotal movement through 90° inside the recesses (25), into a locking position which, when the double hook (602) is in the snap-in position, can be reached by coincidence between the hooks and the side portions (bearing end plates) (603, 604).

33. A fastener as claimed in Claim 1 and one or more of the other Claims, characterised by its use as a pendant ear-ring.

34. A fastener as claimed in Claim 33, characterised in that the suspension opening (510), adjacent to the detent catch and formed from the one hook opening and the arcuate portions of the hinged locking means (501) directed in mirror image, is larger than the suspension opening (509) adjacent to the pivot bearing.

35. A fastener as claimed in Claim 34, characterised in that the side walls (503, 504) of the hinged locking means (501) form an oval frame lying in the plane of the extent of the pivot bearing.

36. A fastener as claimed in Claim 35, characterised in that the frame comprises substantially parallel portions (14) in the region of the maximum width of the oval.

37. A fastener as claimed in Claims 34 to 36, characterised in that the parallel side-wall portions (14) are brought together in a roof shape (15) forming the counter detent (505).

38. A fastener as claimed in Claims 33 to 37, characterised in that double hook (502) and hinged locking means (501) consist of bent parts made of material in the form of wire.

39. A fastener as claimed in Claims 33 to 38 and one or more of the other Claims, characterised in that a flat ear ornament (19) can be fitted to the side walls (503, 504) of the hinged locking means (501) in the region of the larger suspension opening (510).

40. A fastener as claimed in Claims 33 to 39, characterised in that the region of the double hook (502) situated opposite to the region for fitting the flat ear ornament (19) to the hinged locking means (501) is provided with a further fixed flat ear ornament (18).

41. A fastener as claimed in Claim 40, characterised in that the further flat ear ornament (18) is oval in construction and is so dimensioned that the pivotal mobility of the double hook (502) crossing over with the hinged locking means (501) is ensured.

42. A fastener as claimed in Claim 1 and one or more of the preceding Claims, characterised in that this has substantially the shape of a figure 8 in the snap-in position and viewed in the pivotal plane.

43. A fastener as claimed in one or more of the preceding Claims, characterised by its use as a key tag.

## Revendications

1. Fermoir unitaire, notamment pour bijoux, constitué par deux parties de fermoir montées à pivotement en leur première extrémité, sur un axe de pivotement commun, et aptes à être assemblées amoviblement en leurs autres extrémités, caractérisé par le fait qu'une partie de fermoir est constituée par un double crochet (2, 102, 202, 302, 402, 502, 602) doté d'élasticité propre, ayant deux ouvertures de crochet (9, 10, 609, 610) dirigées dans des directions opposées, symétriquement des deux côtés de l'axe de traction (24), et est articulée, par une extrémité de crochet, sur une patte de fermeture (1, 101, 201, 301, 401, 501, 601) constituant l'autre partie de fermoir, et peut être immobilisée en son autre extrémité, sur la patte de fermeture, par effet d'élasticité, au moyen d'un organe d'encliquetage (5 ... 605) et d'un organe d'encliquetage conjugué (7 ... 607), le double crochet (2 ... 602) et la patte de fermeture (1 ... 601) étant aptes à pivoter de 360° en se croisant, pour l'ouverture et la fermeture, et étant réalisés de manière qu'un mouvement de pivotement dans un sens ouvre à chaque fois une ouverture de crochet (9 ... 609) et ferme l'autre (10 ... 610), et inversement.

2. Fermoir selon revendication 1, caractérisé par le fait que la première ouverture de crochet (9 ... 609) peut être dégagée par le mouvement de pivotement de désencliquetage du double crochet (2, 102 ... 602) dans un sens, et l'autre ouverture de crochet (10 ... 610) peut être dégagée par le mouvement de pivotement au-delà de l'encliquetage dans l'autre sens.

3. Fermoir selon les revendications 1 et 2, caractérisé par le fait que la patte de fermeture (1, 101 ... 601) présente des portions arquées qui sont dirigées symétriquement aux ouvertures de crochet (9, 10 ... 609, 610) du double crochet (2 ... 602) et qui, dans la position d'encliquetage du fermoir, ferment les ouvertures de crochet.

4. Fermoir selon les revendications 1 à 3, caractérisé par le fait que la patte de fermeture (1, 101, 201, 301, 401) est réalisée sous la forme d'un arceau en forme de U dont les extrémités libres forment un palier de pivotement commun (6, 106 ... 406) avec une extrémité du double crochet (2, 102 ... 402), et qui encadre celui-ci à la manière d'un portique, et par le fait qu'un organe d'encliquetage (5, 105 ... 405) est agencé sur l'âme de l'arceau et coopère, lors de l'ouverture et de la fermeture, avec un organe d'encliquetage conjugué (7, 107 ... 407) se trouvant à l'autre extrémité du double crochet.

5. Fermoir selon les revendications 1 à 4, caractérisé par le fait que l'organe d'encliquetage (5, 105 ... 605) et le palier de pivotement (6, 106 ... 606) sont constitués par des côtés en vis-à-vis d'un boîtier en forme de cadre (patte de fermeture) dont les deux autres côtés (3, 4, 103, 104 ... 603, 604) constituent des flasques prolongés du palier de pivotement.

6. Fermoir selon les revendications 1 à 5, caractérisé par le fait que le palier de pivotement est constitué par un tourillon (6, 106 ... 606) constituant l'axe de pivotement commun de la patte de fermeture (1, 101 ... 601) et du double crochet (2, 102 ... 602), des flasques (3, 4, 103, 104 ... 603, 604) étant fixés aux extrémités de ce tourillon, et par une extrémité du double crochet qui, par un trou de palier, est monté libre en rotation entre les flasques.

7. Fermoir selon revendication 6, caractérisé par le fait que les flasques de palier (3, 4, 103, 104, 303, 304) sont constitués par des pièces de forme plate mutuellement parallèles, agencées à distance l'une de l'autre.

8. Fermoir selon revendication 6, caractérisé par le fait que les flasques de palier (203, 204, 403, 404) de la patte de fermeture sont en forme de cuvette et sont munis d'évidements pour recevoir l'organe d'encliquetage et le tourillon.

9. Fermoir selon revendication 8, caractérisé par le fait que les flasques de palier (3, 4, 103, 104, 203, 204, 403, 404, 503, 504) sont des pièces moulées ou des pièces façonnées en tôle, et des ouvertures venues de moulage ou façonnées (3', 4', 103', 104', 203', 204', 403', 404', 503', 504') sont prévues en tant qu'évidements.

10. Fermoir selon les revendications 8 et 9 et une ou plusieurs des autres revendications, caractérisé par le fait que les flasques de palier (3, 4 ... 603, 604) sont mutuellement reliés en étant parallèles et séparés par un intervalle au moyen d'un ergot d'encliquetage (5 ... 605) et d'un tourillon (6 ... 606) insérés dans des ouvertures en vis-à-vis.

11. Fermoir selon revendication 10, caractérisé par le fait que, pour assembler mutuellement les flasques de palier (403, 404), les bords libres (13) des ouvertures (403', 404') sont rabattus dans des gorges (12) aménagées dans l'ergot d'encliquetage (405) et dans le tourillon (406).

12. Fermoir selon revendication 10, caractérisé par le fait qu'en leurs extrémités épaulées, l'ergot d'encliquetage (205) et le tourillon (206) sont rivetés aux flasques de palier (203, 204).

13. Fermoir selon les revendications 1 à 5, caractérisé par le fait que le palier de pivotement est constitué par un tourillon (106) formant l'axe de pivotement commun de la patte de fermeture (101) et du double crochet (102) et fixé à une extrémité du double crochet, et par des trous de palier agencés dans les flasques de palier (103, 104) et dans lesquels les extrémités du tourillon sont maintenues à rotation.

14. Fermoir selon revendication 13, caractérisé par le fait que le tourillon (106) du palier de pivotement est formé d'une seule pièce sur l'extrémité du double crochet (102) située en vis-à-vis de l'organe d'encliquetage conjugué (107).

15. Fermoir selon les revendications 1 à 14, caractérisé par le fait que le double crochet (2 ... 602), en position d'encliquetage, est déformable élastiquement en direction du palier de pivotement (6 ... 606).

16. Fermoir selon revendication 15, caractérisé par le fait que le double crochet (2, 302) est réalisé sous la forme d'une pièce en tôle façonnée plate, notamment d'une pièce venue de presse.

17. Fermoir selon les revendications 14 et 15, caractérisé par le fait que le double crochet (102, 502) est une pièce pliée en fil à ressort.

18. Fermoir selon revendication 1 et une ou plusieurs des autres revendications, caractérisé par le fait que l'organe d'encliquetage (5 ... 605) agencé sur la patte de fermeture (1 ... 601) coopère avec l'organe d'encliquetage conjugué (7 ... 607) se trouvant à l'extrémité libre du double crochet (2 ... 602), d'une manière connue en soi en tant que système d'encliquetage à levier élastique opérant radialement, d'une manière autorisant un mouvement du double crochet au-delà de l'encliquetage.

19. Fermoir selon les revendications 4 et 18, caractérisé par le fait que l'organe d'encliquetage est constitué par un ergot d'encliquetage (5, 205, 405, 605) reliant les flasques de palier (3, 4, 203, 204, 403, 404, 603, 604), et l'organe d'encliquetage conjugué est constitué par une encoche d'encliquetage (7, 207, 407, 607).

20. Fermoir selon les revendications 18 et 19, caractérisé par le fait que l'organe d'encliquetage conjugué est constitué par une dépression pour encliquetage (107, 307, 507).

21. Fermoir selon les revendications 18 et 19, caractérisé par le fait que l'encoche d'encliquetage (7, 207, 407, 607) possède sensiblement un profil en V et est aménagée sur la périphérie extérieure du double crochet (2, 202, 402, 602).

22. Fermoir selon revendication 21, caractérisé par le fait que le profil en V de l'encoche d'encliquetage présente un angle de l'ordre de 90°.

23. Fermoir selon les revendications 1 à 5, 18 et une ou plusieurs des autres revendications, caractérisé par le fait que la patte de fermeture (101, 301, 501) est réalisée d'une seule pièce, en tant que pièce en tôle façonnée en forme de U, notamment en tant que pièce façonnée à la presse, et est fermée selon une forme de cadre par le tourillon (106, 306, 506) du palier de pivotement.

24. Fermoir selon revendication 23, caractérisé par le fait que l'organe d'encliquetage (105, 305, 505) est intégré dans l'âme que la patte de fermeture comporte en vis-à-vis du palier de pivotement.

25. Fermoir selon les revendications 23 et 24, caractérisé par le fait que l'organe d'encliquetage (305) est constitué par une languette (307) débordant de la traverse et rabattue vers l'intérieur, laquelle forme un nez d'encliquetage à section droite sensiblement triangulaire.

26. Fermoir selon revendication 1 et une ou plusieurs des autres revendications, caractérisé par le fait que les parties latérales (flasques de palier) (3, 4, 103, 104 ... 603, 604) de la patte de fermeture et le double crochet possèdent, dans leurs zones d'extrémités, chacun une perforation (27) venant en alignement à la position d'encliquetage, pour un verrouillage par enfoncement d'une broche.

27. Fermoir selon revendication 1 et une ou plusieurs des autres revendications, caractérisé par le fait que les parties latérales (flasques de palier) (3, 4 ... 603, 604) de la patte de fermeture (1 ... 601) ont leurs surfaces extérieures dotées de figures d'ornementation et/ou ornées de pierres (21).

28. Fermoir selon revendication 1 et une ou plusieurs des autres revendications, caractérisé par le fait que les parties latérales (flasques de palier) (3, 4 ... 603, 604) de la patte de fermeture (1 ... 601) sont formées de façon à recouvrir totalement ou partiellement les ouvertures de crochet (9, 10 ... 609, 610) du double crochet (2 ... 602), à la position d'encliquetage.

29. Fermoir selon revendication 28, caractérisé par le fait que le double crochet (2, 102, 202, 302, 402, 602) est constitué par un profilé à section droite sensiblement rectangulaire, et les crochets sont munis chacun de deux évidements (25) situés symétriquement sur leurs côtés tournés vers les parties latérales et agencés sur l'axe de traction (24), pour accrocher et immobiliser des anneaux de raccordement (22) plats.

30. Fermoir selon les revendications 28 et 29, caractérisé par le fait que les évidements d'accrochage (25) sont sensiblement en forme de U et présentent ensemble la forme d'un H, du fait de leur agencement symétrique.

31. Fermoir selon les revendications 29 et 30, caractérisé par le fait que les ouvertures d'accrochage des anneaux de raccordement (22) sont réalisées similairement au profil de section droite du double crochet (602) et sont formées de manière que leur longueur (X) corresponde à peu près à la hauteur (X') du profilé du crochet et que leur largeur (Y) corresponde à peu près à la plus grande largeur (Y') du profilé du crochet ainsi qu'à l'épaisseur (Y'') de l'âme (26) entre les évidements (25) opposés.

32. Fermoir selon les revendications 28 à 31, caractérisé par le fait que, dans la position d'ouverture du fermoir, les anneaux d'accrochage (22), lorsque leurs ouvertures d'accrochage sont en position de recouvrement par rapport au profil de section droite du double crochet (602), peuvent être introduits dans les ouvertures de crochet (609, 610), et peuvent être ensuite amenés, par un mouvement de basculement de 90° à l'intérieur des évidements (25), en position de verrouillage, laquelle peut être atteinte, dans la position d'encliquetage du double crochet (602), par le recouvrement du crochet par les parties latérales (flasques de palier) (603, 604).

33. Fermoir selon revendication 1 et une ou plusieurs des autres revendications, caractérisé par son utilisation en tant que pendant d'oreille.

34. Fermoir selon revendication 33, caractérisé par le fait que l'ouverture d'accrochage (510) voisine du système d'encliquetage, formée par la première ouverture de crochet et par les parties arquées dirigées symétriquement de la patte de fermeture (501), est plus grande que l'ouverture d'accrochage (509) voisine du palier de pivotement.

35. Fermoir selon revendication 34, caractérisé par le fait que les parois latérales (503, 504) de la patte de fermeture (501) forment un cadre ovale situé dans le plan dans lequel s'étend le palier de pivotement.

36. Fermoir selon revendication 35, caractérisé par le fait que le cadre présente des portions (14) sensiblement parallèles dans la région de la plus grande largeur de l'ovale.

37. Fermoir selon les revendications 34 à 36, caractérisé par le fait que les portions de paroi latérale parallèles (14) convergent selon une forme en toit (15) constituant l'organe d'encliquetage conjugué (505).

38. Fermoir selon les revendications 33 à 37, caractérisé par le fait que le double crochet (502) et la patte de fermeture (501) consistent en pièces pliées, en un matériau filiforme.

39. Fermoir selon les revendications 33 à 38 et une ou plusieurs des autres revendications, caractérisé par le fait qu'une plaque (19) d'ornementation d'oreille peut être emboîtée sur les parois latérales (503, 504) de la patte de fermeture (501), dans la région de la plus grande ouverture d'accrochage (510).

40. Fermoir selon les revendications 33 à 39, caractérisé par le fait que la zone du double crochet (502) située en face de la zone d'emboîtement pour la plaque (19) d'ornementation d'oreille est sur la patte de fermeture (501) d'une autre plaque d'ornementation (18) d'oreille agencée fixe.

41. Fermoir selon revendication 40, caractérisé par le fait que l'autre plaque (18) d'ornementation d'oreille est de forme ovale et est dimensionnée de façon à assurer la mobilité de pivotement permettant le croisement du double crochet (502) et de la patte de fermeture (501).

42. Fermoir selon revendication 1 et une ou plusieurs des revendications précédentes, caractérisé par le fait que, dans la position d'encliquetage, ce fermoir présente sensiblement la forme d'un 8, en vue sur le plan de pivotement.

43. Fermoir selon une ou plusieurs des revendications précédentes, caractérisé par son utilisation en tant que porte-clés.

EP 0 253 804 B1

Fig.1

Fig.2

Fig.4

Fig.3

13

# Fig.5

202 A

209

VI

201

202 B

11 208 210 207 VI

# Fig.6

202

204'

206

11

11

203'

204

203

11

11

203" 205 204"

# Fig.7

302

111

301

307

305'

305

15

# Fig.8

306

111

111

303

304

**Fig.11**

**Fig.12**

**Fig.13**

**Fig.10**

**Fig.9**

# Fig.15

# Fig.16

# Fig.14

## Fig.17

## Fig.18